# EUROPÄISCHE PATENTANMELDUNG

(11) **EP 2 512 024 A2**
(43) Veröffentlichungstag der Anmeldung: **17.10.2012**
(21) Anmeldenummer: 12158973.3
(22) Anmeldetag: 12.03.2012
(51) Int. Cl.: H02M 7/155

(54) **Netzteil mit einer Schaltungsanordnung und Verfahren zum Betreiben eines Netzteils**

(30) Priorität: 14.04.2011 DE 102011007348
(71) Anmelder: ZF Friedrichshafen AG, 88038 Friedrichshafen (DE)
(72) Erfinder: Budil, Milan, 35601 Sokolov (CZ); Zalud, Viktor, 43908 Pátek (CZ); Szabo, Tomas, 35601 Sokolov (CZ); Stepanek, Karel, 32300 Plzen Bolevec (CZ)

(57) **Zusammenfassung**

Die vorliegende Erfindung betrifft ein Netzteil (100) mit einer Schaltungsanordnung (110), die ausgebildet ist, um eine hohe Spannung (155) in eine niedrige Spannung (167) zu transformieren, dadurch gekennzeichnet, dass das Netzteil (100) ferner eine mit der niedrigen Spannung zu betreibende Steuereinheit (140) zur Ausgabe eines Schaltsignals (175) aufweist. Das Netzteil (100) umfasst ferner eine Hochlast-Schaltungsanordnung (150), die einen Schalter (177) und einer Kapazität (C63) umfasst, wobei der Schalter (177) und die Kapazität (C63) in Serie zwischen einem Anschluss (155, 175) für die hohe Spannung und einem Bezugspotentialanschluss (160) geschalteten sind und ein Verbindungspunkt (180) zwischen dem Schalter (177) und der Kapazität (C63) als Ausgang (185) der Hochlast-Schaltungsanordnung (150) vorgesehen ist. Schließlich ist die Hochlast-Schaltungsanordnung (150) ausgebildet, um ansprechend auf das Schaltsignal (175) den Schalter (177) zu öffnen und/oder zu schließen.

## Beschreibung

Die vorliegende Erfindung bezieht sich auf ein Netzteil mit einer Schaltungsanordnung sowie ein Verfahren zum Betreiben eines Netzteils gemäß den Hauptansprüchen.

Ein kapazitives Netzteil wird oftmals zur Wandlung einer hohen Spannung wie beispielsweise einer Netzspannung von 230 V auf eine niedrige Spannung wie beispielsweise 12 V oder 5V verwendet, um elektronische Bauelemente mit einer solchen niedrigen Spannung betreiben zu können. Je mehr von solchen elektronischen Bauelementen (z. B. LEDs, Sensoren, ...) an ein Netzteil angeschlossen sind, bzw. von einem solchen Netzteil versorgt werden müssen, desto größer sollten der Kondensator und ein entsprechender Widerstand dimensioniert werden, um ausreichend Energie für den Betrieb der an das Netzteil angeschlossenen Bauelemente bereitstellen zu können. Je größer die Bauteile des Netzteils zu dimensionieren sind, desto teurer wird das Netzteil in seiner Herstellung. Außerdem steigt eine Verlustleistung bei der Wahl von für hohe elektrische Leistungen dimensionierten Bauteilen für das Netzteil.

Vor diesem Hintergrund schafft die vorliegende Erfindung ein verbessertes Netzteil sowie ein verbessertes Verfahrens zum Betreiben eines Netzteils gemäß den Hauptansprüchen. Vorteilhafte Ausgestaltungen ergeben sich aus den Unteransprüchen und der nachfolgenden Beschreibung.

Die vorliegende Erfindung schafft ein Netzteil mit einer Schaltungsanordnung, die ausgebildet ist, um eine hohe Spannung in eine niedrige Spannung zu transformieren, wobei das Netzteil ferner eine mit der niedrigen Spannung zu betreibende Steuereinheit zur Ausgabe eines Schaltsignals aufweist, wobei das Netzteil ferner eine Hochlast-Schaltungsanordnung aufweist, die einen Schalter und eine Kapazität umfasst, wobei der Schalter und die Kapazität in Serie zwischen einem Anschluss für die hohe Spannung und einem Bezugspotentialanschluss geschalteten sind und ein Verbindungspunkt zwischen dem Schalter und der Kapazität als Ausgang der Hochlast-Schaltungsanordnung vorgesehen ist und wobei die Hochlast-Schaltungsanordnung ausgebildet ist, um ansprechend auf das Schaltsignal den Schalter zu öffnen und/oder zu schließen.

Ferner schafft die vorliegende Erfindung ein Verfahren zum Betreiben eines Netzteils, wobei das Netzteil eine Schaltungsanordnung aufweist, die ausgebildet ist, um eine hohe Spannung in eine niedrige Spannung zu wandeln und wobei das Netzteil ferner eine mit der niedrigen Spannung zu betreibende Steuereinheit zur Ausgabe eines Schaltsignals aufweist, wobei das Netzteil ferner eine Hochlast-Schaltungsanordnung aufweist, die einen Schalter und eine Kapazität umfasst, wobei der Schalter und die Kapazität in Serie zwischen einem Anschluss für die hohe Spannung und einem Bezugspotentialanschluss geschalteten sind und ein Verbindungspunkt zwischen dem Schalter und der Kapazität als Ausgang der Hochlast-Schaltungsanordnung vorgesehen ist und wobei der die Hochlast-Schaltungsanordnung ausgebildet ist, um ansprechend auf das Schaltsignal den Schalter zu öffnen und/oder zu schließen, und wobei das Verfahren die folgenden Schritte aufweist:
Erfassen eines Spannungspegels auf einer die hohe Spannung führenden Leitung durch die Steuereinheit;
Ausgeben eines Schaltsignals durch die Steuereinheit ansprechend auf den erfassten Spannungspegel; und
Öffnen des Schalters ansprechend auf das Schaltsignal, um einen Stromfluss über den Schalter in die Kapazität zu bewirken, um am Ausgang eine Spannung auszugeben.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programm auf Signalverarbeitungsgerät ausgeführt wird.

Unter einem Netzteil kann dabei eine elektronische Baugruppe verstanden werden, die eine hohe Spannung in eine niedrige Spannung wandelt. Beispielsweise kann ein Netzteil eine Wechselspannung eines Versorgungsnetzes in eine Gleichspannung mit niedrigerem Spannungspegel zum Betrieb von elektronischen Komponenten transformieren. Unter einer Schaltungsanordnung kann dabei eine elektronische Schaltung verstanden werden, die ausgebildet ist, um eine solche Transformation oder Wandlung von einer hohen Spannung in eine niedrige Spannung durchzuführen. Unter einer Steuereinheit kann eine elektronische Baugruppe oder eine integrierte Schaltung verstanden werden, die mit der niedrigen Spannung betrieben wird und die das Schaltsignal als Ausgangssignal bereitstellt. Und einer Hochlast-Schaltungsanordnung kann eine elektronische Schaltung verstanden werden, die ausgebildet ist, um an einem Ausgang eine elektrische Energie oder Leistung mit einem vorbestimmten Spannungspegel auszugeben, wobei dieser Spannungspegel auch bei größeren am Ausgang entnommenen Strömen im Wesentlichen aufrechterhalten werden kann. Insbesondere unterscheidet sich die Hochlast-Schaltungsanordnung von der Schaltungsanordnung dadurch, dass die Hochlast-Schaltungsanordnung im Vergleich zur Schaltungsanordnung bei Entnahme eines gleichgroßen Stroms einen geringeren Einbruch der Spannung am entsprechenden Ausgang aufweist. Und einem Schalter kann ein elektrisches oder elektronisches Bauteil verstanden werden, welches einen Stromfluss ansprechend auf das Schaltsignal steuert oder regelt.

Die vorliegende Erfindung basiert auf der Erkenntnis, dass nun ein leistungsfähiges Netzteil dadurch geschaffen werden kann, dass eine durch die Schaltungsanordnung bereitgestellte niedrige Spannung lediglich zum Betrieb der Steuereinheit verwendet wird und dass weitere elektronische Komponenten durch elektrische Energie vom Ausgang der Hochlast-Schaltungsanordnung versorgt werden können. Da der Betrieb der Steuereinheit meist eine deutlich geringere elektrische Energie erfordert, als der Betrieb einer Vielzahl von zusätzlich am ein Netzteil angeschlossenen elektronische Komponenten, können für die Schaltungsanordnung zur Bereitstellung der niedrigen Spannung elektronische Baugruppen verwendet werden, die in Bezug auf die Verarbeitungsfähigkeit einer elektrischen Leistung gering dimensioniert sind. Dies ermöglicht einerseits geringe Herstellungskosten bei der Herstellung der Schaltungsanordnung und beim Betrieb eine geringere Verlustleistung. Dennoch können auch weitere Komponenten mit Energie aus dem Netzteil versorgt werden, wobei diese Energie durch die Hochlast-Schaltungsanordnung bereitgestellt wird, welche selbst durch das Schaltsignal der Steuereinheit angesteuert wird. Da die Hochlast-Schaltungsanordnung aus wenigen leistungsstarken elektronischen Komponenten aufgebaut ist, kann beim Betrieb des Netzteils eine hohe Verlustleistung vermieden werden. Ferner sind die elektronischen Komponenten der Hochlast-Schaltungsanordnung auch bei einer Dimensionierung für hohe elektrische Leistungen preisgünstig verfügbar.

Günstig ist es, wenn gemäß einer Ausführungsform der vorliegenden Erfindung die Hochlast-Schaltungsanordnung ferner ein Gleichrichterelement, insbesondere eine Diode vorgesehen ist, die zwischen dem Anschluss für die hohe Spannung und dem Schalter geschaltet ist. Insbesondere kann das Gleichrichterelement derart gepolt sein, dass ein Stromfluss von einer die hohe Spannung führenden Leitung zu dem Schalter freigegeben ist und ein Stromfluss von dem Schalter zu der die hohe Spannung führenden Leitung gesperrt ist. Eine derartige Ausführungsform der vorliegenden Erfindung bietet den Vorteil, dass ein Entladen der Kapazität nahezu nur über eine Energieentnahme am Ausgang der Hochlast-Schaltungsanordnung erfolgt, nicht jedoch über die Leitung, welche die hohe Spannung führt.

Ferner kann auch gemäß einer weiteren Ausführungsform der vorliegenden Erfindung die Steuereinheit ausgebildet sein, eine Spannungspegel auf einer Leitung zu erfassen, die die hohe Spannung führt, wobei die Steuereinheit ferner ausgebildet sein kann, um das Schaltsignal ansprechend auf einen erfassten Spannungspegel oder eine erfasste Phase der Spannung auf der Leitung auszugeben. Eine derartige Ausführungsform der vorliegenden Erfindung bietet den Vorteil, dass durch die Ausgabe des Schaltsignals durch die Steuereinheit der Schalter zu vorbestimmten Zeitpunkten in Bezug zu einem Spannungspegel auf der Leitung mit der hohen Spannung geöffnet und/oder geschlossen werden kann, so dass die Kapazität in Abhängigkeit von einem Spannungspegel oder der Phase der Spannung auf der Leitung geladen werden kann. Dies ermöglicht eine sehr präzise Ladung der Kapazität, so dass ein gewünschter Spannungspegel am Ausgang der Hochlast-Schaltungsanordnung sichergestellt werden kann.

Um eine besonders einfach technisch zu realisierende Hochlast-Schaltungsanordnung bereitzustellen, kann die Hochlast-Schaltungsanordnung als Schalter einen Transistor aufweisen. Als Transistor kommt dabei beispielsweise ein Bipolartransostor oder ein CMOS-Transistor in Betracht, wobei der letztere Transistortyp eine besonders geringe Verlustleistung aufweist.

Um eine Ausgabe einer stabilisierten Spannung am Ausgang der Hochlast-Schaltungsanordnung sicherzustellen, kann die Steuereinheit ausgebildet sein, um das Ein- und/oder Ausschalten des Schalters zyklisch zu wiederholen.

Gemäß einer weiteren Ausführungsform der vorliegenden Erfindung kann die Steuereinheit ausgebildet sein, um das Schaltsignal derart auszugeben, dass der Schalter über eine längere Zeitdauer geschlossen als geöffnet ist. Eine derartige Ausführungsform der vorliegenden Erfindung bietet den Vorteil, dass durch die Wahl der zeitlichen Länge des Schaltsignals eine präzise Ladung der Kapazität in möglich ist. Insbesondere dann, wenn der Schalter über eine längere Zeitdauer geschlossen als geöffnet ist, lässt sich ein hohes Reduktionsverhältnis eines Spannungspegels am Anschluss der hohen Spannung in Bezug auf einen Spannungspegel am Ausgang der Hochlast-Schaltungsanordnung realisieren.

Um einen Schutz von an dem Ausgang der Hochlast-Schaltungsanordnung des Netzteils angeschossenen elektronischen Bauelementen zu vermeiden, kann gemäß einer Ausführungsform der vorliegenden Erfindung die Steuereinheit ausgebildet sein, um das Schaltsignal über eine Zeitdauer derart auszugeben, dass eine über die Kapazität abfallende Spannung maximal der Spannung des Schaltsignals in Bezug auf ein Bezugspotential entspricht. Ebenfalls kann gemäß einer weiteren Ausführungsform der vorliegenden Erfindung ein maximaler Spannungspegel des Schaltsignals der niedrigen Spannung entsprechen.

Die Erfindung wird anhand der beigefügten Zeichnungen beispielhaft näher erläutert. Es zeigen:
Fig. 1 ein Blockschaltbild eines Ausführungsbeispiels der vorliegenden Erfindung als Netzteil;
Fig. 2 ein detaillierteres Blockschaltbild der Hochlast-Schaltungsanordnung des Netzteils zur Verwendung in einem Ausführungsbeispiel der vorliegenden Erfindung;
Fig. 3 zwei Diagramme von Spannungsverläufen über die Zeit von unterschiedlichen Spannungen in einer Hochlast-Schaltungsanordnung gemäß einem Ausführungsbeispiel der vorliegenden Erfindung ;
Fig. 4 ein Diagramm eines Energieflusses in einem Netzteil gemäß einem Ausführungsbeispiel der vorliegenden Erfindung; und
Fig. 5 ein Ablaufdiagramm eines Ausführungsbeispiels der vorliegenden Erfindung als Verfahren.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

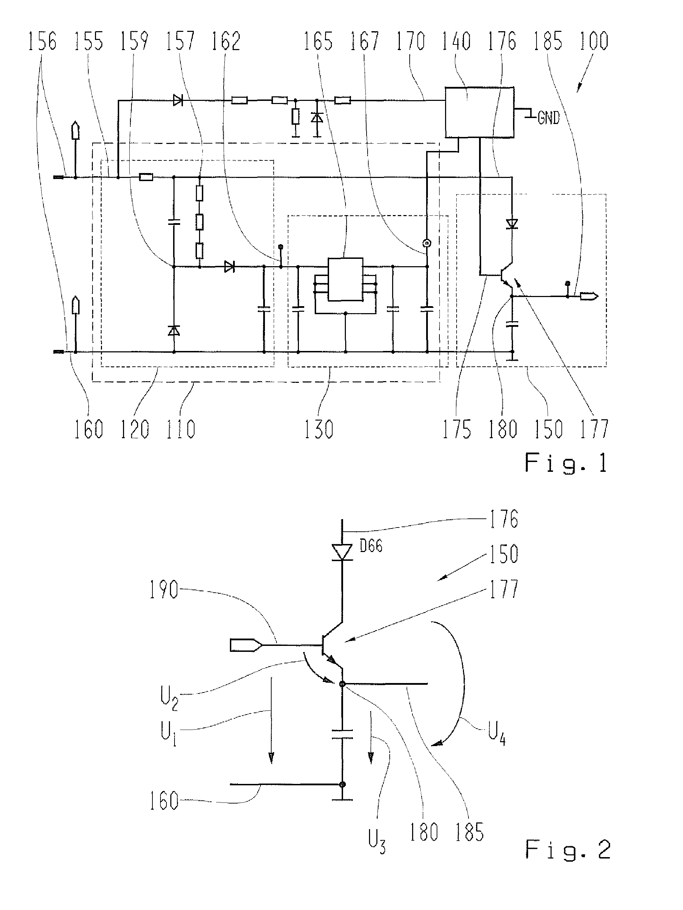

Fig. 1 zeigt ein Blockschaltbild eines Ausführungsbeispiels der vorliegenden Erfindung als Netzteil 100. Das Netzteil 100 umfasst eine Schaltungsanordnung 110, die beispielsweise ein kapazitives Netzteil 120 und einen Spannungsregler 130 umfasst. Ferner umfasst das Netzteil 100 eine Steuereinheit 140 sowie eine Hochlast-Schaltungsanordnung 150.

Das kapazitive Netzteil 120 umfasst einen ersten Widerstand R60, der zwischen einem Anschluss 155 für eine hohe Spannung eines Versorgungsnetzes 156 und einem ersten Verbindungspunkt 157 geschaltet ist. Ferner ist zwischen den ersten Verbindungspunkt 157 und einen zweiten Verbindungspunkt 159 eine erste Kapazität C61 sowie eine Serienschaltung aus drei Widerständen geschaltet. Zwischen einem Anschluss 160 für einen Bezugspotenzial wie beispielsweise ein Massepotenzial ist eine Zenerdiode D62 mit Durchflussrichtung in Richtung des zweiten Verbindungspunktes 159 geschaltet. Zwischen dem zweiten Verbindungspunkt 159 und einem Ausgang 162 des kapazitiven Netz-teils 120 ist ferner eine Diode D63 geschaltet. Zwischen dem Ausgang 162 des kapazitiven Netzteils 120 und den Anschluss 160 für das Bezugspotenzial ist eine zweite Kapazität C68 geschaltet.

Zwischen dem Anschluss 155 für die hohe Spannung und dem Anschluss 160 für das Bezugspotenzial kann eine Netzspannung eines Versorgungsnetzes 156 von beispielsweise 230 V Wechselspannung anliegen. Das kapazitive Netzteil 120 kann diese zwischen den Anschlüssen 155 und 160 anliegende Spannung auf eine Gleichspannung von beispielsweise + 12 V transformieren, die zwischen dem Ausgang 162 des kapazitiven Netzteils 120 und dem am Anschluss 160 anliegenden Bezugspotenzial abfällt.

Diese am Ausgang 162 des kapazitiven Netzteils 120 anliegende Spannung kann im Spannungsregler 130 durch die Verwendung einer dritten Kapazität C65 geglättet und mit einer integrierten Spannungsreglerschaltung 165 in eine niedrige Spannung von beispielsweise + 5 V transformiert werden, welche an einem Ausgang 167 des Spannungsreglers 130 ausgegeben wird. Zusätzlich kann durch eine Parallelschaltung von zwei Kapazitäten C66 und C67 zwischen dem Ausgang 167 des Spannungsreglers 130 und dem Bezugspotenzialanschluss 160 eine Glättung der niedrigen Spannung erreicht werden, die am Anschluss 167 für die niedrige Spannung ausgegeben wird. Auf diese Weise kann die Schaltungsanordnung 110 aus einer hohen Spannung, die zwischen Anschlüssen 155 und 160 anliegt, eine niedrige Spannung transformieren, die zwischen den Anschlüssen 167 und 160 abfällt.

Ferner weist das Netzteil 100 eine Steuereinheit 140 auf, die beispielsweise als digitaler Signalprozessor oder Mikrocontroller ausgestaltet sein kann. Die Steuereinheit 140 wird mit Energie der niedrigen Spannung, das heißt mit Energie aus dem Anschluss 167 des Spannungsreglers 130 gespeist. Die Steuereinheit 140 weist ferner einen Eingang 170 auf, der mit dem Anschluss 155 für die hohe Spannung gekoppelt ist. Insbesondere ist der Anschluss 155 über eine Serienschaltung aus einer Diode D64 und mehrere Widerständen R64, R65 und R67 mit dem Eingang 170 der Steuerschaltung 140 verbunden. Zwischen dem letzten Widerstand R67 der Widerstände und dem Eingang 170 ist ferner ein Widerstand R66 und eine Diode D65 im Parallelschaltung mit dem Bezugspotenzial verbunden. Über den Eingang 170 kann somit die Steuereinheit 140 einen Pegel oder eine Phase der Spannung auf dem Anschluss 155 für die hohe Spannung erfassen und ansprechend auf diesen erfassten Pegel oder die Phase ein Schaltsignal 175 über einen Ausgang ausgeben.

Die Hochlast-Schaltungsanordnung 150 weist einen ersten Eingang 176 auf, der mit dem ersten Verbindungspunkt 157 verbunden ist. Ferner verweist die Hochlast-Schaltungsanordnung 150 einen Schalter 177 auf, der hier als Transistor T61 ausgebildet ist. Der Eingang 175 der Hochlast-Schaltungsanordnung 150 ist über eine Diode D66 mit einem ersten Anschluss des Schalters 177 verbunden, wogegen ein zweiter Anschluss des Schalters 177 über eine Kapazität mit einem Bezugspotenzial bzw. einem entsprechenden Bezugspotenzialanschluss 160 verbunden ist. Ferner ist der zweite Anschluss des Schalters 177 mit einem Verbindungspunkt 180 gekoppelt, der einen Ausgang 185 der Hochlast-Schaltungsanordnung 150 bildet. An diesem Ausgang 185 können weitere elektronische Komponenten angeschlossen werden, die mit spannungsgewandelter elektrischer Energie aus dem Versorgungsnetz 156 versorgt werden sollen. Ferner ist ein Steuereingang 190 des Schalters T61 der Hochlast-Schaltungsanordnung 150 vorgesehen, der mit dem Schaltsignal 175 beaufschlagt wird, so dass über das Schaltsignal 175 der Schalter T61 geöffnet oder geschlossen (oder in eine Zwischenstellung gebracht) werden kann, um einen Stromfluss von dem Eingang 176 der Hochlast-Schaltungsanordnung 150 in die Kapazität C63 zu steuern oder regeln.

Fig. 2 zeigt ein detaillierteres Blockschaltbild der Hochlast-Schaltungsanordnung 150 zur Verwendung in einem Ausführungsbeispiel der vorliegenden Erfindung, wobei zugleich der Abfall von bestimmten Spannungen dargestellt ist, die nachfolgend zur Beschreibung der Funktionsweise der Erfindung verwendet werden. Dabei ist eine erste Spannung U₁ eingetragen, die eine Spannung zwischen dem Steuereingang 190 und dem Bezugspotentialanschluss 160 repräsentiert. Eine zweite in der Fig. 2 eingetragene Spannung U₂ fällt zwischen dem Steueranschluss 190 und dem Hochlast-Verbindungspunkt 180 ab, wogegen eine dritte Spannung U₃ zwischen dem Hochlast-Verbindungspunkt 180 und dem Bezugspotentialanschluss 160 abfällt. Schließlich ist noch eine vierte Spannung U₄ in der Fig. 2 eingetragen, die zwischen dem ersten Anschluss des Schalters 177 und dem Bezugspotentialanschluss 160 abfällt.

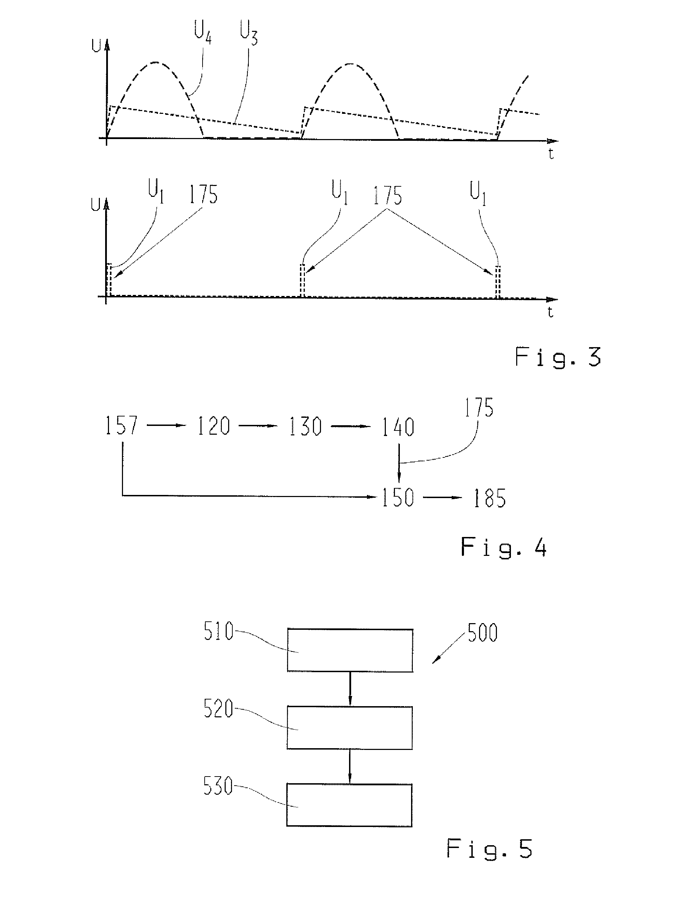

Fig. 3 zeigt zwei Diagramme, in denen Spannungsverläufe der in Fig. 2 näher bezeichneten Spannungen während des Betriebs des Netzteils 100 dargestellt sind. In dem oberen Diagramm ist dabei ein Spannungsverlauf der vierten Spannung U₄ und der dritten Spannung U₃ über die Zeit dargestellt, wogegen im unteren der Diagramm aus Fig. 3 ein Spannungsverlauf der ersten Spannung U₁ wiedergegeben ist.

Die vierte Spannung U₄ stellte dabei Halbwellen einer durch die Diode D66 gleichgerichteten Wechselspannung des Versorgungsnetzes 156 dar. Durch einen kurzen Impuls der ersten Spannung U₁, das heißt durch eine kurze Dauer, in der das Schaltsignal 175 einen hohen Signalpegel annimmt und danach wieder auf einen niedrigen Signalpegel abfällt, wird der Schalter 177 in dieser kurzen Dauer leitend, so dass ein Strom in die Kapazität C63 fließt und diese auflädt. Hierdurch ergibt sich in der Darstellung der dritten Spannung U₃ während dieses Ladevorgangs eine stark ansteigende Spannungsflanke. Der Verlauf der dritten Spannung U₃ sinkt hieran anschließend auf Grund der Energieentnahme über den Ausgang 185 wieder. Wird nun durch die Steuereinheit 140 erneut ein eine positive Halbwelle über den Eingang 170 registriert, das heißt wird ein Ansteigen der hohen Spannung am betreffenden Anschluss 155 erkannt, gibt die Steuereinheit 140 wiederum ein Schaltsignal 175 in Form eines kurzen Impuls des einer höheren Spannung U₁ aus, wodurch der Schalter 177 wieder kurz geöffnet wird und Strom in die Kapazität C63 fließt, um diese aufzuladen. Dieser Vorgang wiederholt sich zyklisch, so dass weitere elektronische Bauteile, die über den Ausgang 185 mit dem Netzteil 100 bzw. der Hochlast-Schaltungsanordnung 150 des Netzteils 100 verbunden sind mit hohen elektrischen Leistungen versorgt werden können, ohne dass viele Bauelemente in dem Netzteil 100 für die Verarbeitung von hohen elektrischen Leistungen auszulegen sind.

Dabei kann sichergestellt werden, dass die am Ausgang 180 in Bezug zum Bezugspotenzialanschluss 160 abfallende (dritte) Spannung U₃ maximal der Differenz zwischen der ersten U₁ und der zweiten U₂ Spannung entspricht, da anderenfalls der Schalter 177 nicht öffnen würde. Auf diese Weise kann auch sichergestellt werden, dass am Ausgang 185 keine zu hohe Spannung auftritt, so dass an diesem Ausgang 180 angeschlossene Baumelemente Wände nicht beschädigt werden. Dies kann als eine Art "Selbstsicherung" des Netzteils 100 betrachtet werden.

Fig. 4 zeigt ein Diagramm eines Energieflusses in einem Netzteil gemäß einem Ausführungsbeispiel der vorliegenden Erfindung. Von einer Spannungsversorgung 157, die beispielsweise das Versorgungsnetz 156 bildet, wird in einem ersten Pfad das kapazitive Netzteil 120 mit elektrischer Energie versorgt, welches wiederum den Spannungsregler 130 mit elektrischer Energie versorgt und dieser Spannungsregler 130 elektrische Energie für die Steuereinheit 140 bereitstellt. Zugleich wird in einem zweiten Pfad aus der Versorgungsspannung 156 die Hochlast-Schaltungsanordnung 150 mit elektrischer Energie versorgt, die ferner von der Steuereinheit 140 das Schaltsignal 175 erhält. Über dieses Schaltsignal 175 lässt sich eine Aufladung der Kapazität C63 steuern, so dass eine gewünschte Spannung am Ausgang 185 an weitere elektronische Komponenten abgegeben werden kann. Diese am Ausgang 185 abgegebene Spannung kann durch sehr einfache technische Mittel sehr belastbar ausgestaltet werden, ohne dass eine Vielzahl von Komponenten des Netzteils 100 für eine höhere Leistung dimensioniert werden müssen.

Fig. 5 zeigt ein Ablaufdiagramm eines Ausführungsbeispiels der vorliegenden Erfindung als Verfahren 500 zum Betreiben eines Netzteils. Das Verfahren verwendet einen Netzteil, das eine Schaltungsanordnung aufweist, die ausgebildet ist, um eine hohe Spannung in eine niedrige Spannung zu transformieren und wobei das Netzteil ferner eine mit der niedrigen Spannung zu betreibende Steuereinheit zur Ausgabe eines Schaltsignals aufweist. Weiterhin umfasst das Netzteil ferner eine Hochlast-Schaltungsanordnung, die einen Schalter und einer Kapazität umfasst, wobei der Schalter und die Kapazität in Serie zwischen einem Anschluss für die hohe Spannung und einem Bezugspotentialanschluss geschalteten sind und ein Verbindungspunkt zwischen dem Schalter und der Kapazität als Ausgang der Hochlast-Schaltungsanordnung vorgesehen ist. Ferner ist die Hochlast-Schaltungsanordnung ausgebildet, um ansprechend auf das Schaltsignal den Schalter zu öffnen und/oder zu schließen. Das Verfahren 500 umfasst einen Schritt des Erfassens 510 eines Spannungspegels auf einer die hohe Spannung führenden Leitung durch die Steuereinheit. Ferner umfasst das Verfahren 500 einen Schritt des Ausgebens 520 eines Schaltsignals durch die Steuereinheit ansprechend auf den erfassten Spannungspegel und einen Schritt des Öffnens und/oder Schließens 530 des Schalters ansprechend auf das Schaltsignal, um einen Stromfluss über den Schalter in die Kapazität zu bewirken, um am Ausgang eine Spannung auszugeben.

Die Erfindung lässt sich unter Bezug auf die zuvor beschriebenen Ausführungsbeispiele wie folgt zusammenfassen. Mit der vorliegenden Erfindung kann ein Generieren von mehr Leistung trotz der Verwendung von kleinen Bauteilen im Netzteil erreicht werden. Realisiert wird dieses Ziel über eine zuschaltbare Peripherie, die in der Form einer Hochlast- Schaltungsanordnung oder Empower-Schaltung hinzugefügt wird und die beispielsweise auch nur auf Bedarf zugeschaltet werden kann. Zu diesem Zweck kann auch das Schaltsignal nur im Bedarfsfall von der Steuereinheit ausgegeben werden. Somit kann das kapazitive Netzteil (in der vorangegangenen Beschreibung als Schaltungsanordnung bezeichnet) kleiner dimensioniert und mit kleineren Bauteilen realisiert werden, was eine deutliche Kosteneinsparung trotz zusätzlicher Peripherie (in der Form der Hochlast-Schaltungsanordnung oder Empower-Schaltung) bedeutet. Ein Gesamtschaltbild des Netzteils wird in Fig. 1 beschrieben, aus dem das kapazitive Netzteil 120, der Spannungsregler 130 sowie die Empower-Schaltung 150 erkennbar ist.

Das kapazitive Netzteil 120 umfasst dabei eine Verschaltung von mehreren Bauelementen wie dem Begrenzungswiderstand R60, dem Eingangskondensator C61, einer Zenerdiode D62, einer Gleichrichterdiode 063 und einem Filterkondensator C68, wodurch eine Regelung der Eingangsspannung von beispielsweise 230V auf 12V erreicht wird. Diese Spannung von beispielsweise 12 V kann mit einem Spannungsregler 130 weiter verarbeitet werden, um beispielsweise eine Spannungsregelung von 12V auf 5V konstant für die Steuereinheit (die beispielsweise einen Mikrocontroller umfasst) bereitzustellen. Der Spannungsregler 130 umfasst einen Spannungsregler-Baustein 165 (beispielsweise als integrierte Schaltung) und mehrere Filterkondensatoren C 65, C66 und C67, um eine Regelung der Spannung von 12V auf 5V (glatt) zu erreichen. Das kapazitive Netzteil 120 versorgt somit den Mikrocontroller 140 über den Spannungsregler 130.

Ferner ist eine Empower-Schaltung oder Hochlast-Schaltungsanordnung 150 vorgesehen, wie sie beispielsweise in den Figuren 1 und 2 dargestellt ist. Diese Empower-Schaltung 150 st eine Schaltung zur Versorgung von weiteren Verbrauchern wie Elektronikbauteile wie LEDs, Temperatursensoren, Buzzer, oder ähnlichen Bauelementen. Die Empower-Schaltung 150 umfasst eine Gleichrichterdiode D66, einen Schalttransistor T61 und einen Speicherkondensator C63.

Die Diode D66 lässt nur positive Halbwellen (Uₚᵤₗₛₑ bzw. U₄) der Netzspannung 230V bei beispielsweise 50Hz durch. Wenn an dem Schalteingang 190 der Empower-Schaltung ein Schaltsignal 175 anliegt schaltet der Transistor T61 durch und der Kondensator C63 wird geladen. Die Spannung U₁ (die als Steuerspannung oder -signal des Schalters T61 dient) am Ausgang 185 steigt an bis das Schaltsignal 175 auf einen Spannungspegel U₁ von null gesetzt wird. Der Maximalwert der Spannung U₃ ist auf U₁ - U₂ begrenzt, so dass die Hochlast-Schaltungsanordnung 150 eine Selbstsicherung durchführt. Die am Ausgang 185 ausgegebene Spannung wird daher höchstens den Spannungspegel von U₁ erreichen. Nach dem Ausschalten bzw. nach der Begrenzung entlädt sich der Kondensator C63 und gibt die Energie an die Verbraucher über den Ausgang 185 ab. Die Spannung U₃ sinkt entsprechend der Entladung des Kondensators C63 ab. Dabei sollte die Kapazität des Kondensators C63 so ausgelegt sein, dass die Verbraucher bis zum nächsten Aufladen des Kondensators C63 mit einer ausreichend hohen Spannung versorgt werden.

Über das am Eingang 170 eingelesene Spannungspegelüberwachungssignal erkennt die Steuereinheit (d.h. der Mikrocontroller den Nulldurchgang der Netzspannung (d.h. den Beginn positive Halbwelle) und setzt somit das Schaltsignal 175 für den Transistor T61 auf einen hohen Signalpegel. Jetzt wiederholt sich der Vorgang des Aufladens des Kondensators C63.

Das vorstehend beschriebene Netzteil bietet dabei mehrere Vorteile. Dadurch, dass an dem kapazitiven Netzteil nur der Mikrocontroller oder die Steuereinheit 140 mit konstanten 5V als niedriger Spannung gespeist wird, können die meisten Bauteile des Netzteils 100 für kleine elektrische Leistungen dimensioniert und kostengünstig realisiert werden. Ferner kann die Versorgung der zusätzlichen Verbraucher wie LEDs oder Sensoren über die separate Empower-Schaltung 150 (unabhängig vom kapazitiven Netzteil 120) versorgt werden.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt sowie in einer anderen als in der beschriebenen Reihenfolge ausgeführt werden.

Umfasst ein Ausführungsbeispiel eine "und/oder" Verknüpfung zwischen einem ersten Merkmal und einem zweiten Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### Bezugszeichen

- 100: Netzteil
- 110: Schaltungsanordnung
- 120: kapazitives Netzteil
- 130: Spannungsregler
- 140: Steuereinheit, Mikrocontroller
- 150: Empower-Schaltung, Hochlast-Schaltungsanordnung
- 155: Anschluss für hohe Spannung
- 156: Versorgungsnetz
- 157: erster Verbindungspunkt
- 160: Bezugspotentialanschluss, Masseanschluss
- 162: Ausgang des kapazitiven Netzteils 120
- 165: Spannungsregler-Baustein
- 167: Ausgang des Spannungsreglers 130
- 170: Überwachungseingang der Steuereinheit 140
- 175: Schaltsignal
- 176: Eingang der Hochlast-Schaltungsanordnung für die hohe Spannung
- 177: Schalter, Transistor
- 180: Hochlast-Verbindungspunkt
- 185: Ausgang der Hochlast-Schaltungsanordnung 150
- 190: Steuereingang

- U₁: erste Spannung
- U₂: zweite Spannung
- U₃: dritte Spannung
- U₄: vierte Spannung

- 500: Verfahren zum Betreiben eines Netzteils
- 510: Schritt des Erfassens
- 520: Schritt des Ausgebens
- 530: Schritt des Öffnens und/oder Schließens

## Patentansprüche

1. Netzteil (100) mit einer Schaltungsanordnung (110), die ausgebildet ist, um eine hohe Spannung (155) in eine niedrige Spannung (167) zu transformieren, **dadurch gekennzeichnet, dass** das Netzteil (100) ferner eine mit der niedrigen Spannung zu betreibende Steuereinheit (140) zur Ausgabe eines Schaltsignals (175) aufweist, wobei das Netzteil (100) ferner eine Hochlast-Schaltungsanordnung (150) aufweist, die einen Schalter (177) und einer Kapazität (C63) umfasst, wobei der Schalter (177) und die Kapazität (C63) in Serie zwischen einem Anschluss (155, 175) für die hohe Spannung und einem Bezugspotentialanschluss (160) geschalteten sind und ein Verbindungspunkt (180) zwischen dem Schalter (177) und der Kapazität (C63) als Ausgang (185) der Hochlast-Schaltungsanordnung (150) vorgesehen ist und wobei der die Hochlast-Schaltungsanordnung (150) ausgebildet ist, um ansprechend auf das Schaltsignal (175) den Schalter (177) zu öffnen und/oder zu schließen.

2. Netzteil (100) gemäß Anspruch 1, **dadurch gekennzeichnet, dass** die Hochlast-Schaltungsanordnung (150) ferner ein Gleichrichterelement (D66), insbesondere eine Diode aufweist, zwischen dem Anschluss (155, 176) für die hohe Spannung und dem Schalter (177) vorgesehen ist.

3. Netzteil (100) gemäß Anspruch 2, **dadurch gekennzeichnet, dass** das Gleichrichterelement (D66) derart gepolt ist, dass ein Stromfluss von einer die hohe Spannung führenden Leitung (175) zu dem Schalter (177) freigegeben ist und ein Stromfluss von dem Schalter (177) zu der die hohe Spannung führenden Leitung (175) gesperrt ist.

4. Netzteil (100) gemäß einem der vorangegangenen Ansprüche, **dadurch gekennzeichnet, dass** die Steuereinheit (140) ausgebildet ist, einen Spannungspegel auf einer Leitung (155) zu erfassen, die die hohe Spannung führt, wobei die Steuereinheit (140) ferner ausgebildet ist, um das Schaltsignal (175) ansprechend auf einen erfassten Spannungspegel oder eine erfasste Phase der Spannung auf der Leitung (155) auszugeben.

5. Netzteil (100) gemäß einem der vorangegangenen Ansprüche, **dadurch gekennzeichnet, dass** die Hochlast-Schaltungsanordnung (150) als Schalter (177) eine Transistor (T31) aufweist.

6. Netzteil (100) gemäß einem der vorangegangenen Ansprüche, **dadurch gekennzeichnet, dass** die Steuereinheit (140) ausgebildet ist, um das Ein- und/oder Ausschalten des Schalters (177) zyklisch zu wiederholen.

7. Netzteil (100) gemäß einem der vorangegangenen Ansprüche, **dadurch gekennzeichnet, dass** die Steuereinheit (140) ausgebildet ist, um das Schaltsignal (175) derart auszugeben, dass der Schalter (177) über eine längere Zeitdauer geschlossen als geöffnet ist.

8. Netzteil (100) gemäß einem der vorangegangenen Ansprüche, **dadurch gekennzeichnet, dass** die Steuereinheit (140) ausgebildet ist, um das Schaltsignal (175) über eine Zeitdauer derart auszugeben, dass eine über die Kapazität (C63) abfallende Spannung maximal der Spannung des Schaltsignals (175) in Bezug auf ein Bezugspotential (160) entspricht.

9. Netzteil (100) gemäß einem der vorangegangenen Ansprüche, **dadurch gekennzeichnet, dass** ein maximaler Spannungspegel des Schaltsignals (175) der niedrigen Spannung (167) entspricht.

10. Verfahren zum Betreiben eines Netzteils (100), wobei das Netzteil eine Schaltungsanordnung (110) aufweist, die ausgebildet ist, um eine hohe Spannung (155) in eine niedrige Spannung (167) zu transformieren und wobei das Netzteil (100) ferner eine mit der niedrigen Spannung (167) zu betreibende Steuereinheit (140) zur Ausgabe eines Schaltsignals (175) aufweist, wobei das Netzteil (100) ferner eine Hochlast-Schaltungsanordnung (150) aufweist, die einen Schalter (177) und einer Kapazität (C63) umfasst, wobei der Schalter (177) und die Kapazität (C63) in Serie zwischen einem Anschluss (155, 176) für die hohe Spannung und einem Bezugspotentialanschluss (160) geschalteten sind und ein Verbindungspunkt (180) zwischen dem Schalter (177) und der Kapazität (C63) als Ausgang (185) der Hochlast-Schaltungsanordnung (150) vorgesehen ist und wobei der die Hochlast-Schaltungsanordnung (150) ausgebildet ist, um ansprechend auf das Schaltsignal (175) den Schalter (177) zu öffnen und/oder zu schließen, und wobei das Verfahren (500) die folgenden Schritte aufweist:
Erfassen (510) eines Spannungspegels auf einer die hohe Spannung führenden Leitung (155) durch die Steuereinheit (140) ;
Ausgeben (520) eines Schaltsignals (175) durch die Steuereinheit (140) ansprechend auf den erfassten Spannungspegel; und
Öffnen und/oder Schließen (530) des Schalters (177) ansprechend auf das Schaltsignal (175), um einen Stromfluss über den Schalter (177) in die Kapazität (C63) zu bewirken, um am Ausgang (185) eine Spannung auszugeben.

11. Computer-Programmprodukt mit Programmcode zur Durchführung eines Verfahrens (500) nach Anspruch 11, wenn das Programm in einem Netzteil (100) ausgeführt wird.
